# EUROPÄISCHE PATENTANMELDUNG

(11) **EP 4 810 879 A1**
(43) Veröffentlichungstag der Anmeldung: **23.09.2026**
(21) Anmeldenummer: 25164184.1
(22) Anmeldetag: 17.03.2025
(51) Int. Cl.: F25D 13/06

(54) **KÜHLSYSTEM FÜR LEBENSMITTELPRODUKTE**

(71) Anmelder: Bühler AG, 9240 Uzwil (CH)
(72) Erfinder: Skibbe, Jan, 38528 Adenbüttel (DE); Strähl, Patrick, 8057 Zürich (CH); Baumgartner, Thomas, 9556 Affeltrangen (CH)
(74) Vertreter: HGF

(57) **Zusammenfassung**

Die Erfindung betrifft ein Kühlsystem (10) für Lebensmittelprodukte, welches eine Einfülleinheit (12), eine Kühleinheit (14), eine Entnahmeeinheit (46), wobei die Einfülleinheit (12) dazu eingerichtet ist, eine Menge an Lebensmittelprodukten in die Kühleinheit (14) zu füllen, wobei die Kühleinheit (14) eine Vielzahl (16) von Kühlelementen (18) aufweist, die dazu eingerichtet ist, die bestimmte Menge an Lebensmittelprodukten in der Kühleinheit (14) zu kühlen, wobei das Kühlsystem (10) dazu eingerichtet ist, eine Gruppe von Kühlelementen (18) aus der Vielzahl (16) von Kühlelementen (18) basierend auf der vorbestimmten Menge an Lebensmittelprodukten in der Kühleinheit (14) auszuwählen, wobei das Kühlsystem (10) dazu eingerichtet ist, die vorbestimmte Menge an Lebensmittelprodukten mit der ausgewählten Gruppe von Kühlelementen (18) für eine vorgegebene Dauer und/oder auf eine vorgegebene Temperatur zu kühlen, wobei die Entnahmeeinheit (46) dazu eingerichtet ist, das gekühlte Lebensmittelprodukt aus der Kühleinheit (14) zu transportieren.

## Beschreibung

### Technisches Gebiet

Die Erfindung betrifft ein Kühlsystem für Lebensmittelprodukte und ein Verfahren zur Steuerung eines Kühlsystems für Lebensmittelprodukte.

### Hintergrund der Erfindung

Derzeit besteht eine Vielzahl an unterschiedlichen Lösungen zur Kühlung von Lebensmittelprodukten in der Lebensmittelindustrie. Hierbei sind insbesondere Kühlsysteme bekannt, welche mittels eines Rührapparates und eines Ventilators die Lebensmittelprodukte in einem beckenähnlichen Körper kontinuierlich kühlen. Hierbei ergeben sich eine Vielzahl von Nachteilen und Problemen, sodass ein Bedarf an innovativen und robusten Kühlsystemen für Lebensmittelprodukte besteht.

### Zusammenfassung der Erfindung

Das Ziel der vorliegenden Erfindung kann darin gesehen werden, ein verbessertes Kühlsystem für Lebensmittelprodukte bereitzustellen, welches die Merkmale des unabhängigen Anspruchs 1 aufweist.

Ein Vorteil der vorliegenden Erfindung kann darin gesehen werden, dass der Energiebedarf für die Kühlung von Lebensmittelprodukten deutlich reduziert werden kann, da in Abhängigkeit einer Auslastung der Kühleinheit durch Lebensmittelprodukte die Anzahl der Kühlelemente entsprechend angepasst werden kann. Somit muss das Kühlsystem nicht permanent unter einer Volllast betrieben werden, wie es derzeit bei im Markt befindlichen Systemen üblich ist.

Ein weiterer Vorteil des Kühlsystems des Anspruchs 1 ist, dass während der Kühlung mittels der Luft keinerlei Scherkräfte oder Ähnliches auf das zu kühlende Lebensmittelprodukt wirken und somit die Qualität des Lebensmittelproduktes konstant hochzuhalten. Somit kann insbesondere das Kühlsystem im Vergleich zu bisherigen Lösungen das Lebensmittelprodukt schonender kühlen, da während des eigentlichen Kühlprozesses kein Rührwerk oder ähnliche Mischeinrichtung erforderlich ist.

Dies wird erfindungsgemäß dadurch erreicht, dass das Kühlsystem für Lebensmittelprodukte, insbesondere schütt- und/oder rieselfähige Lebensmittelprodukthalbzeuge, eine Einfülleinheit, eine Kühleinheit und eine Entnahmeeinheit aufweist, wobei die Einfülleinheit dazu eingerichtet ist, eine vorbestimmte Menge an Lebensmittelprodukten in die Kühleinheit zu füllen, wobei die Kühleinheit eine Vielzahl von Kühlelementen aufweist, die dazu eingerichtet ist, die vorbestimmte Menge an Lebensmittelprodukten in der Kühleinheit zu kühlen, wobei das Kühlsystem dazu eingerichtet ist, eine Gruppe von Kühlelementen aus der Vielzahl von Kühlelementen basierend auf der vorbestimmten Menge an Lebensmittelprodukten in der Kühleinheit auszuwählen, wobei das Kühlsystem dazu eingerichtet ist, die vorbestimmte Menge an Lebensmittelprodukten mit der ausgewählten Gruppe von Kühlelementen für eine vorgegebene Dauer und/oder eine vorgegebene Temperatur zu kühlen, wobei die Entnahmeeinheit dazu eingerichtet ist, das gekühlte Lebensmittelprodukt aus der Kühleinheit zu transportieren.

Mit anderen Worten kann das Kühlsystem gezielt einzelne Kühlelemente aus der Vielzahl von Kühlelementen auswählen, um eine Gruppe von Kühlelementen zu bilden, um somit die Auslastung der Kühleinheit gezielt an die vorhandene Menge an Lebensmittelprodukten in der Kühleinheit anpassen zu können. Bei den Lebensmittelprodukten kann es sich insbesondere um schütt- und/oder rieselfähige Lebensmittelprodukthalbzeuge oder Ähnliches handeln. Beispiele für Lebensmittelprodukte und/oder schütt- und/oder rieselfähige Lebensmittelprodukthalbzeuge sind Kakao, insbesondere Kakaonibs, Nüsse oder Getreide. Ein weiteres Beispiel für Lebensmittelprodukte sind Kakaonibs mit einer Partikelgröße von 1 bis 12 mm sowie Malz mit einer Partikelgröße zwischen 2 und 3 mm. Bei der Einfülleinheit kann sich um einen Schneckenförderer oder ähnliches handeln, dass das Lebensmittelprodukt bspw. von einer Röstanlage in die Kühleinheit befördert. Bevorzugt rutscht das Lebensmittelprodukt in die Kühleinheit, sodass es sich an einer bestehenden Lebensmittelproduktoberfläche in der Kühleinheit zurückstaut. Ab einem gewissen Grad der Rückstaus wird das Lebensmittelprodukt erneut von der Einfülleinheit erfasst, sodass das Lebensmittelprodukt an einer fortgeschrittenen Position in die Einfülleinheit rutschen kann. Somit kann die Kühleinheit kontinuierlich mit Lebensmittelprodukt befüllt werden.

Bevorzugt weist die Kühleinheit eine Vielzahl von Kühlelementen auf welche bspw. Öffnungen, Düsen oder ähnliches sein können. Diese Kühlelemente können Luft aufnehmen als auch abgeben in Abhängigkeit einer Konfiguration und/oder eines Betriebs der Kühleinheit. Durch das Durchleiten von Luft durch das Lebensmittelprodukt in der Kühleinheit kann die Temperatur des Lebensmittelprodukts in der Kühleinheit gesenkt werden. Bevorzugt werden dabei nur die Kühlelemente genutzt, welche sich in direkter Umgebung des Lebensmittelprodukts befinden. Dies kann dadurch erreicht, werden, dass aus der Vielzahl von Kühlelementen eine Gruppe von Kühlelementen ausgewählt wird und nur die Gruppe zum Kühlen verwendet wird. Bevorzugt kann die Gruppe anhand einer Schätzung der Menge des Lebensmittelprodukts, welches bspw. in einem vorherigen Prozessschritt wie bspw. Rösten verarbeitet wurden, ausgewählt werden und/oder die Gruppe kann mittels einer Vermessung der Menge des Lebensmittelprodukts mittels einer Sensoreinheit ausgewählt werden. Nachdem Kühlen auf eine vorbestimmte Temperatur und/oder nach einer vorbestimmten Dauer kann das Lebensmittelprodukt aus der Kühleinheit mittels der Entnahmeeinheit abtransportiert werden.

Weiter bevorzugt ist das Lebensmittelprodukt während des Kühlens des Lebensmittelproduktes frei von jeglichen Scherkräften durch Rühren.

Ein Vorteil dieser Ausführungsform ist, dass kein Abtrag der Lebensmittelprodukte während des Kühlens durch Reibung oder Ähnliches entsteht und somit die Staubentstehung reduziert werden kann. Ein weiterer Vorteil ist die Reduzierung des Bruchs aufgrund der geringen mechanischen Einwirkung.

Weiter bevorzugt ist die Vielzahl von Kühlelementen zumindest in einer ersten Reihe und in einer zweiten Reihe angeordnet, wobei das Kühlsystem dazu eingerichtet ist, zumindest die erste Reihe der Kühlelemente oder zumindest die erste Reihe und die zweite Reihe der Kühlelemente zu aktivieren, um die Gruppe von Kühlelementen auszuwählen.

Ein Vorteil dieser Ausführungsform ist, dass der Steuerungsaufwand der Kühlelemente reduziert werden kann, da mittels eines zentralen Steuerelementes pro Reihe gezielt die Kühlleistung des Kühlsystems angepasst werden kann.

Weiter bevorzugt ist die Vielzahl von Kühlelementen in einer Vielzahl von Reihen angeordnet, wobei das Kühlsystem dazu eingerichtet ist, zumindest einen Teil der Vielzahl von Reihen auszuwählen, um die Gruppe von Kühlelementen auszuwählen.

Ein Vorteil dieser Ausführungsform ist, dass für jeden Füllgrad der Kühleinheit mit Lebensmittelprodukt eine entsprechende Gruppe an Kühlelement bzw. Anzahl von Reihen ausgewählt werden kann, um somit die Energieeffizienz des Kühlsystems weiter zu steigern.

Vorzugsweise weist die Kühleinheit für jede Reihe von Kühlelementen ein separates Sperrklappenelement zur Steuerung eines Luftstroms der jeweiligen Reihe von Kühlelementen auf, wobei das Kühlsystem dazu eingerichtet ist, die Gruppe von Kühlelementen durch Aktivieren oder Deaktivieren der entsprechenden separaten Sperrklappenelemente jede Reihe von Kühlelementen auszuwählen.

Ein Vorteil dieser Ausführungsform ist, dass die Anzahl der Sperrklappenelemente deutlich reduziert werden kann, da nur für jede Reihe ein Sperrklappenelement benötigt wird, sodass die Gesamtanzahl der Teile des Kühlsystems reduziert werden kann.

Weiter bevorzugt weist jedes Kühlelement ein Einlasselement zum Einführen von Prozessluft in die Kühleinheit und ein Auslasselement zum Absaugen von Prozessluft aus der Kühleinheit auf.

Ein Vorteil dieser Ausführungsform ist, dass jedes Kühlelement individuell in Abhängigkeit eines jeweiligen Anwendungsszenarios als auch der Auslastung des Kühlsystems angepasst und genutzt werden kann werden kann. Bevorzugt kann die Prozessluft zum Einführen in die Kühleinheit durch einen Ventilator an einer Ausgangsseite des Kühlsystems durch Ansaugen bereitgestellt werden. In einem solchen Szenario kann insbesondere auf einer der Ausgangsseite gegenüberliegenden Seite eine separate Kühleinheit vorhanden sein, um die einströmende Prozessluft vorzukühlen. Weiter bevorzugt kann die Prozessluft mittels eines Ventilators in jedes Kühlelement eingeblasen werden. Vorzugsweise kann Prozessluft mittels eines Ventilators oder Ähnlichem durch ein Kühlelement bzw. das Auslasselement abgesaugt werden. Weiter bevorzugt kann die Prozessluft auch erhitzt werden, um anstelle der Kühlung einen Trocknungsprozess für das Lebensmittelprodukt zu realisieren.

Weiter bevorzugt ist das Einlasselement eine erste Öffnung in einer ersten Seitenwand der Kühleinheit, wobei das Auslasselement eine zweite Öffnung in einer zweiten Seitenwand oder der ersten Seitenwand der Kühleinheit ist.

Ein Vorteil dieser Ausführungsform ist, dass in Abhängigkeit eines Kundenwunsches oder Ähnlichem die Prozessluftführung individuell gestaltet werden kann.

Vorzugsweise weist das Kühlsystem eine Sensoreinheit auf, die dazu eingerichtet ist, eine tatsächliche Kontur einer Oberfläche des Lebensmittelprodukts in der Kühleinheit zu bestimmen, wobei das Kühlsystem dazu eingerichtet ist, die ausgewählte Gruppe von Kühlelementen basierend auf der tatsächlichen Kontur an Lebensmittelprodukten in der Kühleinheit anzupassen.

Ein Vorteil dieser Ausführungsform ist, dass mittels der Sensoreinheit eine tatsächliche Kontur der Oberfläche des Lebensmittelprodukts bestimmen kann, sodass anhand dieser Kontur die Gruppe an Kühlelementen ausgewählt bzw. angepasst werden kann. Somit lässt sich genauer bestimmen, wie das Lebensmitteprodukt in der Kühleinheit liegt. Somit kann die Gruppe an Kühlelementen derart ausgewählt werden, dass nur die Kühlelemente kühlen, welche in ihrer Umgebung Lebensmittelprodukt aufweisen. Weiter bevorzugt ist die Sensoreinheit dazu eingerichtet, die vorbestimmte Menge an Lebensmittelprodukt in der Kühleinheit erstmalig zu ermitteln. Vorzugsweise kann ebenso ein Schätzwert für die Menge an Lebensmittelprodukt vorliegen, welcher basierend auf den Messwerten der Sensoreinheit verfeinert bzw. angepasst wird, um die tatsächliche Menge und/oder Kontur des Lebensmittelprodukts zu ermitteln.

Vorzugsweise weist die Sensoreinheit einen Radarfüllstandsensor und/oder einen Vibrationsfüllstandsensor auf.

Ein Vorteil dieser Ausführungsform ist, dass mithilfe der jeweiligen Sensoreinheit die Oberflächenkontur des Lebensmittelprodukts in Abhängigkeit eines Anwendungsszenarios angepasst werden kann.

Vorzugsweise weist die Einfülleinheit mindestens ein Einfüllschneckenförderelement zum Transportieren von Lebensmittelprodukten in die Kühleinheit auf.

Ein Vorteil dieser Ausführungsform ist, dass ein kontinuierlicher Fluss an Lebensmittelprodukt in die Kühleinheit gewährleistet werden kann. Bevorzugt kann die Einfülleinheit eine Vielzahl bspw. zwei Einfüllschneckenförderelemente aufweisen. Weiter bevorzugt ist eine Rotationsrichtung des Einfüllschneckenförderelement derart ausgestaltet, dass diese zu einem Mittelpunkt des Kühlsystems zeigt. Weiter bevorzugt kann eine Förderrichtung des Einfüllschneckenförderelement sowohl nach innen als auch nach außen erfolgen.

Vorzugsweise weist das Einfüllschneckenförderelement eine konstante Steigung zum Transportieren von Lebensmittelprodukten auf.

Ein Vorteil dieser Ausführungsform ist, dass, wenn das Einfüllschneckenförderelement ein Lebensmittelprodukt über einen bereits gefüllten Abschnitt der Kühleinheit transportiert, dieses konstant über die Kühleinheit verteilt werden kann.

Vorzugsweise ist das Einfüllschneckenförderelement dazu eingerichtet, die Kühleinheit mit Lebensmittelprodukt Reihe für Reihe von Kühlelementen zu beladen.

Ein Vorteil dieser Ausführungsform ist, dass die kontinuierliche Befüllung der Kühleinheit dafür sorgt, dass Lebensmittelprodukte über eine gesamte Höhe der Kühleinheit aufgeschüttet werden und somit nur die Reihen aktiviert werden müssen, welche tatsächlich mit Lebensmittelprodukt beladen sind.

Vorzugsweise weist die Entnahmeeinheit zumindest ein Auslassschneckenförderelement auf, wobei das Auslassschneckenförderelement eine zunehmende Steigung aufweist, um eine konstante Fließgeschwindigkeit des Lebensmittelprodukts aufrechtzuerhalten.

Ein Vorteil dieser Ausführungsform ist, dass an einem Ablass des Kühlsystems ein möglichst konstanter Volumenstrom an Lebensmittelprodukt erreicht werden kann.

Vorzugsweise weist das Kühlsystem eine Grundkörpereinheit auf, wobei die Grundkörpereinheit die erste Seitenwand und die zweite Seitenwand aufweist, wobei die erste Seitenwand und die zweite Seitenwand zueinander geneigt sind, sodass das Lebensmittelprodukt durch die Schwerkraft zum Auslassschneckenförderelement gezogen wird.

Ein Vorteil dieser Ausführungsform ist, dass in Abhängigkeit der Ausgestaltung der Grundkörpereinheit der Betrieb des Kühlsystems weiter verbessert werden kann. Bevorzugt sind die Seitenwände an einer Oberseite des Kühlsystem weiter voneinander beabstandet als an einer Unterseite des Kühlsystems, um die Neigung der Seitenwände zueinander auszubilden.

Vorzugsweise ist das Auslassschneckenförderelement auf einer ersten Seite der beiden Seitenwände angeordnet, wobei das Einfüllschneckenförderelement auf einer zweiten Seite der beiden Seitenwände gegenüber der ersten Seite angeordnet ist, wobei das Einfüllschneckenförderelement dazu eingerichtet ist, die Grundkörpereinheit der Kühleinheit mit Lebensmittelprodukt zu füllen, wobei das Einfüllschneckenförderelement dazu eingerichtet ist, Lebensmittelprodukt über einen Abschnitt der Grundkörpereinheit zu transportieren, wobei dieser Abschnitt mit Lebensmittelprodukt gefüllt ist, sodass die Kühleinheit Reihe für Reihe von Kühlelementen beladen wird.

Ein Vorteil dieser Ausführungsform ist, dass durch diese Art der Befüllung der Grundkörpereinheit bzw. der Kühleinheit, sich das Lebensmittelprodukt auf möglichst wenig Reihen an Kühlelementen begrenzt. Somit kann die Energieeffizienz weiter gesteigert werden, da jede Reihe an Kühlelementen mit Lebensmittelprodukt im wesentlich vollständig bedeckt ist und somit keine Reihen an Kühlelementen aktiviert werden müssen, welche bspw. nur teilweise mit Lebensmittelprodukt beladen sind. Bevorzugt kann dabei die erste Seite die Oberseite der Grundkörpereinheit und die zweite Seite die Unterseite der Grundkörpereinheit sein.

Weiter bevorzugt kann sowohl das Auslassschneckenförderelement als auch das Einfüllschneckenförderelement auch auf der gleichen Seite angeordnet werden. Weiter bevorzugt können auch Szenarien umgesetzt werden, wobei mehrere Auslassschneckenförderelemente als auch mehrere Einfüllschneckenförderelemente vorgesehen werden können. Beispielhaft können zwei Einfüllschneckenförderelemente an einer Oberseite der Grundkörpereinheit angeordnet werden und zwei Auslassschneckenförderelemente oder ein Auslassschneckenförderelement an einem Bodenteil der Grundkörpereinheit angeordnet werden.

Weiter bevorzugt ist jede Reihe von Kühlelementen entlang eines Vektors orientiert, der eine Neigung von im Wesentlichen 40 bis 70 Grad in Bezug auf eine Erstreckungsrichtung des Einfüllschneckenförderelements aufweist, um das Beladen Reihe für Reihe zu verbessern.

Ein Vorteil dieser Ausführungsform ist, dass mittels der Neigung erste eine erste Reihe im Wesentlichen vollständig mit Lebensmittelprodukt befüllt wird, bevor die nächste Reihe von Kühlelementen beladen wird.

Vorzugsweise weist das Kühlsystem eine Prozessluftquelle auf, die mit der Vielzahl von Kühlelementen verbunden ist, insbesondere mit der ersten Öffnung, um den Kühlelementen gekühlte Luft zuzuführen.

Ein Vorteil dieser Ausführungsform ist, dass unterschiedliche Methodiken zur Bereitstellung von Prozessluft umgesetzt werden können. Beispielsweise kann die Prozessluftquelle auf einer ersten Seite angeordnet werden, welche dazu eingerichtet ist, Prozessluft von einer Eingangsseite durch das Kühlsystem zur Ausgangsseite anzusaugen. Weiter bevorzugt kann die Prozessluftquelle ebenso mittels der Einlassseite Prozessluft in das Kühlsystem einblasen. Weiter bevorzugt können sowohl auf der Einlass- als auch auf der Ablassseite Prozessluftquellen angeordnet werden, um somit die Kühlleistung weiter zu erhöhen. Weiter bevorzugt kann auf der Einlassseite eine Kühleinheit zum Kühlen der Prozessluft angeordnet werden und auf einer Auslassseite eine Prozessluftquelle wie beispielsweise ein Ventilator angeordnet werden.

Weiter bevorzugt weist das Kühlsystem eine Absaugeinheit auf, die mit Kühlelementen verbunden ist, insbesondere ausschließlich mit den zweiten Öffnungen der Kühlelemente, um heiße Luft aus der Kühleinheit abzusaugen.

Ein Vorteil dieser Ausführungsform ist, dass es sich überraschenderweise als vorteilhaft erwiesen hat, die Ventilation zum Absaugen der Prozessluft auf die Ablassseite anzuordnen, da dies einen erhöhten Wirkungsgrad aufweist.

Ein weiterer Aspekt der Erfindung betrifft ein Verfahren zur Steuerung eines Kühlsystems für Lebensmittelprodukte, insbesondere schütt- und/oder rieselfähige Lebensmittelprodukthalbzeuge, umfassend die Schritte:
- Empfangen eines Eingabedatenelementes, welches einen Indikator für eine vorbestimmte Menge an Lebensmittelprodukt aufweist, das in eine Kühleinheit des Kühlsystems geladen wird,
- Erzeugen eines Ausgabedatenelementes basierend auf dem Eingabedatenelement, wobei das Ausgabedatenelement eine Gruppe von Kühlelementen aufweist, die aus einer Vielzahl von Kühlelementen zur Kühlung der vorbestimmten Menge an Lebensmittelprodukt ausgewählt wurden.

Ein Vorteil dieser Ausführungsform ist, dass in Abhängigkeit einer vorbestimmten Menge an Lebensmittelprodukt, welches in die Kühleinheit geladen wird, gezielt Kühlelemente aus der Vielzahl von Kühlelementen ausgewählt werden können, um die Effizienz des Kühlsystems weiter zu steigern.

Vorzugsweise weist das Verfahren den Schritt auf Erzeugen eines Schaltsignals für mindestens ein separates Sperrklappenelement, welches ein Kühlelement basierend auf dem Ausgabedatenelement steuert.

Ein Vorteil dieser Ausführungsform ist, dass jede Reihe an Kühlelementen aus der Vielzahl von Kühlelementen über ein separates Sperrklappenelement verfügen und dies somit gezielt gesteuert werden kann.

Weiter bevorzugt umfasst das Verfahren den Schritt:
- Anpassen des Ausgabedatenelements basierend auf einem Messdatenelement, welches eine tatsächliche Menge an Lebensmittelprodukt in der Kühleinheit aufweist, wobei die tatsächliche Menge von einer Sensoreinheit gemessen wurde.

Ein Vorteil dieser Ausführungsform ist, dass die Schätzung an Lebensmittelprodukt, welches in dem Kühlsystem ist, mittels einer Messung angenähert werden kann.

Weiter bevorzugt weist das Verfahren zumindest einen der folgenden Schritte auf:
- Senden eines Aktivierungssignals zur maximalen Auslastung der Einfülleinheit,
- Senden eines Freigabesignals an das Röstsystem nach einem Erreichen der maximalen Auslastung der Einfülleinheit,
- Senden eines Haltsignals an das Röstsystem und/oder die Einfülleinheit zum Stoppen eines Beladens von Lebensmittelprodukt in die Kühleinheit,
- Senden des Schaltsignals nach dem Haltsignal,
- Bestimmen einer erforderlichen Menge an Prozessluft, basierend auf dem Schaltsignal,
- Aktivieren einer Prozessluftquelle, basierend auf der bestimmten Menge an erforderlicher Prozessluft,
- Deaktivieren der Prozessluftquelle nach einer vorbestimmten Zeit und/oder abhängig von der Temperatur des Lebensmittelprodukts in der Kühleinheit,
- Senden eines Startsignals an eine Entnahmeeinheit zum Entladen der Kühleinheit,
- Senden eines Entleerungssignals zur gleichzeitigen Aktivierung der Einfülleinheit und der Entnahmeeinheit zur Entleerung des Kühlsystems,
- Senden eines ersten Reinigungssignals zur Aktivierung aller separaten Sperrklappenelemente aller Kühlelemente und zur Aktivierung der Prozessluftquelle zur Reinigung des Systems.

Ein Vorteil dieser Ausführungsform ist, dass die Schritte des Verfahrens und des Ablaufes zur Steuerung des Kühlsystems aufeinander abgestimmt werden können, um somit den Energiebedarf des Kühlsystems weiter zu reduzieren.

### Zeichnungen

Im Folgenden werden bevorzugte Ausführungsformen der Erfindung in Bezugnahme auf die beigefügten Zeichnungen erläutert. Die Zeichnungen zeigen:
Figuren 1 bis 8 ein Kühlsystem gemäß einer Ausführungsform.
Figuren 9 und 10 ein Flussdiagramm zur Illustration von Schritten des Verfahrens gemäß einer Ausführungsform.
Fig. 11 ein Kühlsystem 10 gemäß einer Ausführungsform.

### Ausführungsformen der Erfindung

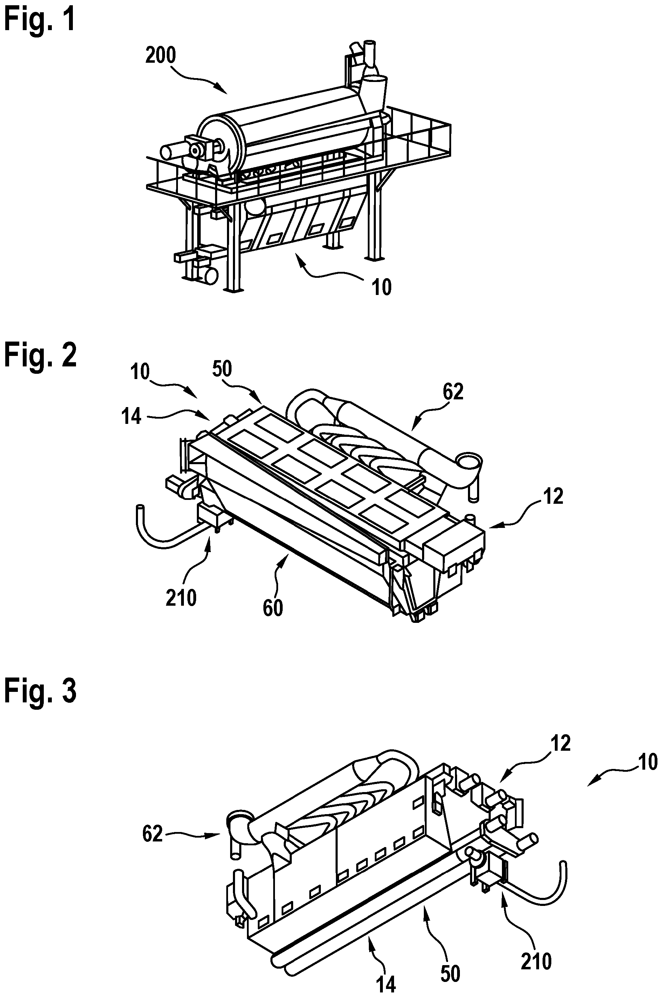

Fig. 1 zeigt ein Kühlsystem 10 gemäß einer Ausführungsform. Das Kühlsystem 10 für Lebensmittelprodukte, insbesondere schütt- und/oder rieselfähige Lebensmittelprodukthalbzeuge, weist eine Einfülleinheit 12, eine Kühleinheit 14 und eine Entnahmeeinheit 46 auf. Ferner ist die Einfülleinheit 12 dazu eingerichtet, eine vorbestimmte Menge an Lebensmittelprodukten in die Kühleinheit 14 zu füllen, wobei die Kühleinheit 14 eine Vielzahl 16 von Kühlelementen 18 aufweist, die dazu eingerichtet ist, die vorbestimmte Menge an Lebensmittelprodukten in der Kühleinheit 14 zu kühlen, wobei das Kühlsystem 10 dazu eingerichtet ist, eine Gruppe 20 von Kühlelementen 18 aus der Vielzahl 16 von Kühlelementen 18 basierend auf der vorbestimmten Menge an Lebensmittelprodukten in der Kühleinheit 14 auszuwählen, wobei das Kühlsystem 10 dazu eingerichtet ist, die vorbestimmte Menge an Lebensmittelprodukten mit der ausgewählten Gruppe 20 von Kühlelementen 18 für eine vorgegebene Dauer und/oder auf eine vorgegebene Temperatur zu kühlen, wobei die Entnahmeeinheit 46 dazu eingerichtet ist, das gekühlte Lebensmittelprodukt aus der Kühleinheit 14 zu transportieren. Wie in der Fig. 1 dargestellt ist, kann die Kühleinheit beispielsweise unterhalb eines Röstsystems 200 angeordnet werden.

Fig. 2 zeigt ein Kühlsystem 10 gemäß einer Ausführungsform. Das Kühlsystem 10 weist auf einer ersten Seite die Einfülleinheit 12 auf zum Einfüllen von Lebensmittelprodukten in die Kühleinheit 14. Bevorzugt kann an der Kühleinheit 14 ein Abtransportsystem 210 angeordnet werden, um das Lebensmittelprodukt zu einem nächsten Prozessschritt oder einem Lager zu transportieren. Weiter bevorzugt weist das Kühlsystem 10 eine erste Prozessluftquelle 60 auf als auch eine zweite Prozessluftquelle 62. Beispielsweise kann die Prozessluftquelle 60 der Zuluftführung dienen, wobei die zweite Prozessluftquelle 62 der Abluftführung dient. Bevorzugt kann in der ersten Prozessluftquelle 60 und/oder der zweiten Prozessluftquelle 62 ein Ventilator vorgesehen werden oder Ähnliches, um Luft durch die Kühleinheit 14 strömen zu lassen. Weiter bevorzugt weist das Kühlsystem 10 eine Grundkörpereinheit 50 auf, um einen definierten Lagerraum für das Lebensmittelprodukt ausbilden zu können.

Fig. 3 zeigt ein Kühlsystem 10 gemäß einer Ausführungsform. Wie in der Fig. 3 zu erkennen ist, umfasst das Kühlsystem 10 eine Einfülleinheit 12 und eine Kühleinheit 14 welche in Zusammenwirkung mit einer Grundkörpereinheit 50 stehen kann. Weiter bevorzugt kann an dem Kühlsystem 10 ein Abtransportsystem 210 angeordnet werden, um Lebensmittelprodukt aus dem Kühlsystem 10 zu führen. Vorzugsweise weist das Kühlsystem 10 eine zweite Prozessluftquelle 62 auf, wie beispielsweise eine Abluftführung.

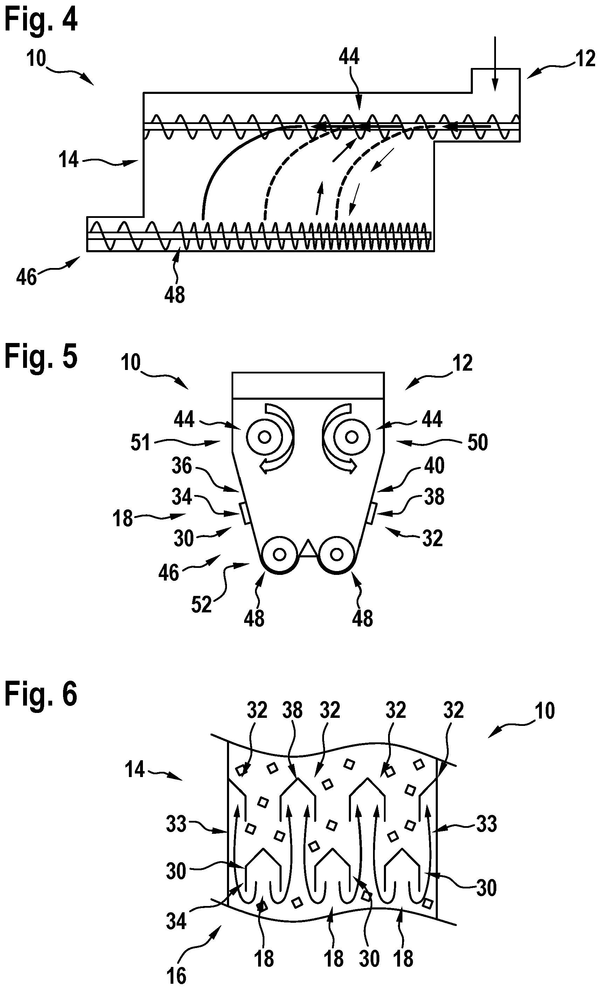

Fig. 4 zeigt eine schematische Darstellung des Kühlsystems 10. Bevorzugt weist das Kühlsystem 10 eine Einfülleinheit 12 auf, welche ein Einfüllschneckenförderelement 44 aufweist. Mithilfe des Einfüllschneckenförderelements 44 kann Lebensmittelprodukt kontinuierlich in die Kühleinheit 14 gefüllt werden. Dabei kann die Befüllung insbesondere derart erfolgen, dass Lebensmittelprodukt in die Kühleinheit 14 rutscht und sich dort ansammelt. Sobald wie in der Figur 4 dargestellt, die Kühleinheit 14 in einem vorderen Abschnitt befüllt wurde, wird zusätzliches Lebensmittelprodukt erneut von dem Einfüllschneckenförderelement 44 ergriffen und tiefer in die Kühleinheit 14 befördert. Weiter bevorzugt weist das Kühlsystem 10 eine Entnahmeeinheit 46 auf, die zumindest ein Auslassschneckenförderelement 48 aufweist. Wie in der Fig. 4 zu sehen ist, weist das Einfüllschneckenförderelement eine kontinuierliche Steigung auf und das Auslassschneckenförderelement 48 eine zunehmende Steigung.

Fig. 5 zeigt eine schematische Darstellung des Kühlsystems 10 gemäß einer Ausführungsform. Das Kühlsystem 10 weist eine Einfülleinheit 12 auf, welche insbesondere zwei Einfüllschneckenförderelemente 44 aufweist. Ferner weist das Kühlsystem 10 eine Entnahmeeinheit 46 auf, die zwei Auslassschneckenförderelemente 48 aufweist. Weiter bevorzugt kann Lebensmittelprodukt mittels der zwei Einfüllschneckenförderelemente 44 in die Kühleinheit 14 gefüllt werden. Bevorzugt können die Einfüllschneckenförderelemente 44 auf einer ersten Seite 51 der Grundkörpereinheit 50 angeordnet sein. Zusätzlich können bevorzugt die Auslassschneckenförderelemente 48 auf einer zweiten Seite 52 der Grundkörpereinheit 50 angeordnet sein. Wie in der Figur 5 schematisch dargestellt, kann es sich bei der ersten Seite 51 um eine Oberkante der Grundkörpereinheit 50 handeln und bei der zweiten Seite 52 um eine Unterkante der Grundkörpereinheit 50. Weiter bevorzugt kann eine Vielzahl 16 von Kühlelementen 18 in dem Kühlsystem 10 angeordnet werden. Mittels der Kühlelemente 18 kann das Lebensmittelprodukt innerhalb des Kühlsystems 10 gekühlt werden. Bevorzugt kann jedes Kühlelement 18 ein Einlasselement 30 als auch ein Auslasselement 32 aufweisen. Bevorzugt kann das Einlasselement 30 eine erste Öffnung 34 in einer ersten Seitenwand 36 der Kühleinheit 14 aufweisen. Weiter bevorzugt weist das Auslasselement 32 eine zweite Öffnung 38 in der zweiten Seitenwand 40 der Kühleinheit 14 auf. Bevorzugt können das Einlasselement 30 als auch das Auslasselement 32 auf unterschiedlichen Seitenwänden als auch auf der gleichen Seitenwand angeordnet werden.

Fig. 6 zeigt eine schematische Darstellung der Kühleinheit 14. Die Kühleinheit 14 weist eine Vielzahl 16 von Kühlelementen 18 auf. Bevorzugt kann jedes Kühlelement 18 ein Einlasselement 30 zum Einführen von Prozessluft in die Kühleinheit 14 aufweisen. Weiter bevorzugt weist jedes Kühlelement 18 ein Auslasselement 32 auf, um Prozessluft aus der Kühleinheit 14 absaugen zu können. Wie in der Fig. 6 beispielhaft dargestellt ist, kann somit ein Luftstrom 33 von dem Einlasselement 30 zum Auslasselement 32 transportiert werden. Wie in der Fig. 6 verdeutlicht, kann sowohl die erste Öffnung 34 des Einlasselementes als auch die zweite Öffnung 38 des Auslasselementes 32 in derselben Seitenwand der Kühleinheit angeordnet werden.

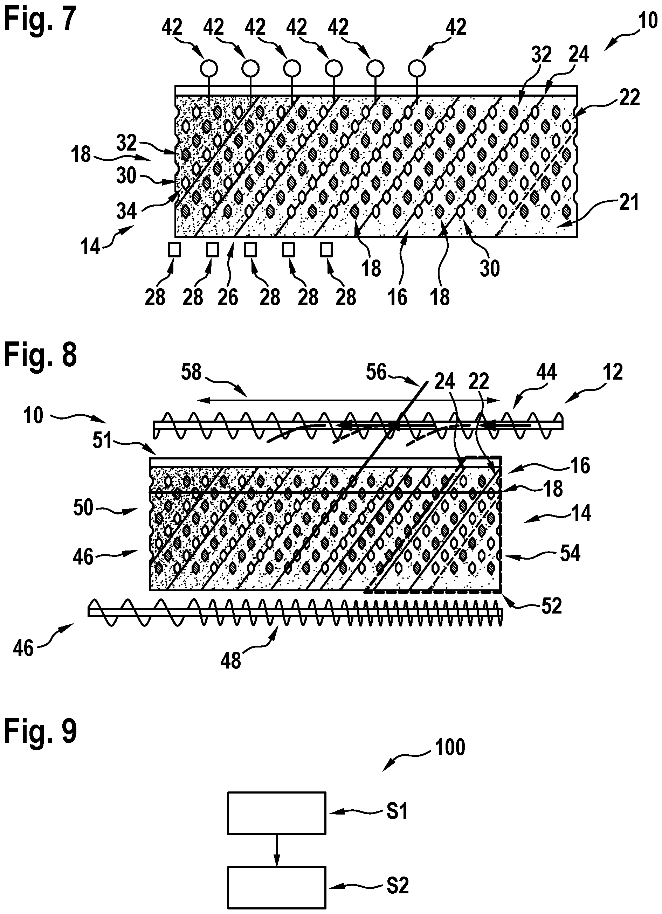

Fig. 7 zeigt das Kühlsystem gemäß einer Ausführungsform. Wie in der Fig. 7 dargestellt wird, weist das Kühlsystem 10 innerhalb der Kühleinheit 14 eine Vielzahl 16 von Kühlelementen 18 auf. Die Kühlelemente 18 können dabei in einer ersten Reihe 22 als auch in einer zweiten Reihe 24 angeordnet werden. Weiter bevorzugt kann eine Vielzahl von Reihen 26 an Kühlelementen 18 entlang der Kühleinheit 14 angeordnet werden. Bevorzugt kann das Kühlsystem 10 in Abhängigkeit einer Auslastung des Kühlsystems 10 einen Teil der Vielzahl von Reihen 26 auswählen, um die Gruppe 20 von Kühlelementen 18 auszuwählen.

Bevorzugt kann jede Reihe 22,24 von Kühlelementen 18 ein separates Sperrklappenelement 28 zur Steuerung eines Luftstroms der jeweiligen Reihe 22, 24 von Kühlelementen aufweisen. Somit kann gezielt Prozessluft in eine jeweilige Reihe 22, 24 von Kühlelementen 18 eingeführt werden. Bevorzugt weist jedes Kühlelement 18 ein Einlasselement 30 zum Einführen von Prozessluft in die Kühleinheit 14 und ein Auslasselement 32 zum Absaugen von Prozessluft aus der Kühleinheit 14 auf. Wie in der Fig. 7 dargestellt ist, sind sowohl das Einlasselement 30 als auch das Auslasselement 32 auf der gleichen Seitenwand angeordnet. Bevorzugt kann das Kühlsystem 10 eine Sensoreinheit 42 aufweisen. Die Sensoreinheit 42 kann eine Befüllung der Kühleinheit 14 anhand einer tatsächlichen Kontur einer Oberfläche des Lebensmittelprodukts in der Kühleinheit 14 ermitteln, um somit die Gruppe 20 von Kühlelementen 18 anhand der tatsächlichen Befüllung anzupassen. Wie in der Fig. 7 gezeigt ist, kann bevorzugt für jede Reihe 22, 24 von Kühlelementen 18 eine separate Sensoreinheit 42 angeordnet werden. Weiter bevorzugt kann es eine vorbestimmte Anzahl 21 an Kühlelementen 18 geben, welche immer aktiviert sind, da aufgrund der Ausgestaltung des Kühlsystems 10 davon auszugehen ist, dass an dieser Stelle zu kühlendes Lebensmittelprodukt vorhanden ist.

Fig. 8 zeigt ein Kühlsystem 10 gemäß einer Ausführungsform. Das Kühlsystem 10 weist eine Kühleinheit 14 auf. Die Kühleinheit 14 weist eine Vielzahl 16 von Kühlelementen 18 auf. Weiter bevorzugt umfasst das Kühlsystem 10 eine Grundkörpereinheit 50, welche an einer ersten Seite 51 ein Einfüllschneckenförderelement 44 der Einfülleinheit 12 aufweist. Weiter bevorzugt umfasst die Entnahmeeinheit 46 ein Auslassschneckenförderelement 48, welches an einer zweiten Seite 52 der Grundkörpereinheit 50 angeordnet ist. Weiter bevorzugt ist jede Reihe 22, 24 von Kühlelementen 18 entlang eines Vektors 56 ausgerichtet bzw. orientiert, der eine Neigung von im Wesentlichen 40 bis 70 Grad in Bezug auf eine Erstreckungsrichtung 58 des Einfüllschneckenförderelements 44 aufweist, um das Beladen der Reihe 22, 24 für Reihe 22, 24 zu verbessern. Weiter bevorzugt ist das Einfüllschneckenförderelement 44 dazu eingerichtet, Lebensmittelprodukt über einen Abschnitt 54 der Grundkörpereinheit 50 zu transportieren, wobei dieser Abschnitt 54 mit Lebensmittelprodukt gefüllt ist, sodass die Kühleinheit 14 der Reihe 22, 24 für Reihe 22, 24 von Kühlelementen beladen wird.

Fig. 9 zeigt ein schematisches Flussdiagramm zur Illustration von Schritten des Verfahrens 100 gemäß einer Ausführungsform. Das Verfahren 100 zur Steuerung eines Kühlsystems 10 für Lebensmittelprodukte, insbesondere schütt- und/oder rieselfähige Lebensmittelprodukthalbzeuge, weist bevorzugt die folgenden Schritte auf: Empfangen S1 eines Eingabedatenelementes, welches einen Indikator für eine vorbestimmte Menge an Lebensmittelprodukt aufweist, dass in eine Kühleinheit 14 des Kühlsystems 10 geladen wird, Erzeugen S2 eines Ausgabedatenelementes basierend auf dem Eingabedatenelement, wobei das Ausgabedatenelement eine Gruppe 20 von Kühlelementen 18 aufweist, die aus einer Vielzahl 16 von Kühlelementen 18 zur Kühlung der vorbestimmten Menge an Lebensmitteprodukt ausgewählt wurden.

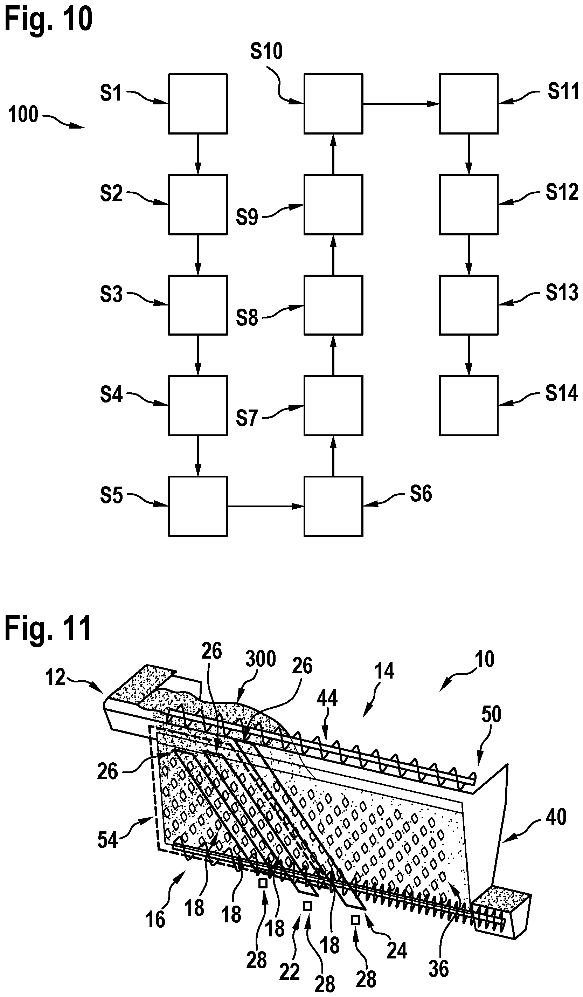

Fig. 10 zeigt ein Flussdiagramm zur Illustration von Schritten des Verfahrens 100 gemäß einer Ausführungsform. Bevorzugt weist das Verfahren 100 die gleichen Schritte S1 und S2, wie diese bereits hinsichtlich der Fig. 9 erläutert wurden. Weiter bevorzugt umfasst das Verfahren 100 den Schritt Erzeugen S3 eines Schaltsignals für mindestens ein separates Sperrklappenelement 28, welches ein Kühlelement 18 basierend auf dem Ausgabedatenelement steuert. Vorzugsweise weist das Verfahren 100 den Schritt Anpassen S4 des Ausgabedatenelementes basierend auf einem Messdatenelement auf, welches eine tatsächliche Kontur an Lebensmittelprodukt in der Kühleinheit 14 aufweist, wobei die tatsächliche Kontur von einer Sensoreinheit 42 gemessen wurde. Weiter bevorzugt weist das Verfahren 100 zumindest einen der folgenden Schritte auf: Senden S5 eines Aktivierungssignals zur maximalen Auslastung der Einfülleinheit 12, Senden S6 eines Freigabesignals an ein Röstsystem 200 nach einem Erreichen der maximalen Auslastung der Einfülleinheit 12, Senden S7 eines Haltsignals an das Röstsystem 200 und/oder die Einfülleinheit 12 zum Stoppen eines Beladens von Lebensmittelprodukten in die Kühleinheit 14, Senden S8 des Schaltsignals nach dem Haltsignal, Bestimmen S9 einer erforderlichen Menge an Prozessluft basierend auf dem Schaltsignal, Aktivieren S10 einer Prozessluftquelle 60, basierend auf der bestimmten Menge an erforderlicher Prozessluft, Deaktivieren der Prozessluftquelle 60 nach einer vorbestimmten Zeit und/oder abhängig von der Temperatur des Lebensmittelprodukts in der Kühleinheit 14, Senden S12 eines Startsignals an eine Entnahmeeinheit 46 zum Entladen der Kühleinheit 14, Senden S13 eines Entleerungssignals zur gleichzeitigen Aktivierung der Einfülleinheit 12 und der Entnahmeeinheit 46 zur Entleerung des Kühlsystems 10, Senden S14 eines ersten Reinigungssignals zur Aktivierung aller separaten Sperrklappenelemente 28 aller Kühlelemente 18 und zur Aktivierung der Prozessluftquelle 60 zur Reinigung des Kühlsystems 10.

Fig. 11 zeigt ein Kühlsystem 10 gemäß einer Ausführungsform. Das Kühlsystem 10 weist bevorzugt eine Einfülleinheit 12, eine Kühleinheit 14 sowie eine Entnahmeeinheit 46 auf. Bevorzugt weist die Kühleinheit 14 eine Vielzahl 16 von Kühlelementen 18 auf, wobei das Kühlsystem 10 dazu eingerichtet ist, eine Gruppe 20 von Kühlelementen 18 auszuwählen. Bevorzugt kann die Vielzahl 16 von Kühlelementen 18 zumindest in einer ersten Reihe 22 und einer zweiten Reihe 24 angeordnet sein. Weiter bevorzugt kann das Kühlsystem 10 eine Vielzahl von Reihen 26 aufweisen. Bevorzugt kann die Einfülleinheit 12 ein Einfüllschneckenförderelement 44 aufweisen, welches dazu eingerichtet ist, Lebensmittelprodukt über einen Abschnitt 54 der Grundkörpereinheit 50 zu transportieren, wobei dieser Abschnitt 54 mit Lebensmittelprodukt gefüllt ist, sodass die Kühleinheit 14 Reihe 22, 24 für Reihe 22, 24 von Kühlelementen 18 beladen wird. Bevorzugt kann die Grundkörpereinheit 50 eine erste Seitenwand 36 und eine zweite Seitenwand 40 aufweisen, wobei die erste Seitenwand 36 und die zweite Seitenwand 40 zueinander geneigt sind, sodass das Lebensmittelprodukt durch die Schwerkraft zum Auslassschneckenförderelement 48 gezogen wird, welches von der Entnahmeeinheit 46 umfasst ist. Bevorzugt kann jede Reihe 22, 24 von Kühlelementen 18 ein Sperrklappenelement 28 aufweisen. Bevorzugt kann jede Reihe 22, 24 von Kühlelementen 18 schräg in die Grundkörpereinheit 50 aufgeschichtet werden. In Abhängigkeit eines Befüllgrades der Grundkörpereinheit 50 kann die Gruppe 20 von der Vielzahl 16 von Kühlelementen 18 angepasst werden.

## Patentansprüche

1. Kühlsystem (10) für Lebensmittelprodukte, insbesondere schütt- und/oder rieselfähige Lebensmittelprodukthalbzeuge, umfassend:
- eine Einfülleinheit (12),
- eine Kühleinheit (14),
- eine Entnahmeeinheit (46),
wobei die Einfülleinheit (12) dazu eingerichtet ist, eine vorbestimmte Menge an Lebensmittelprodukten in die Kühleinheit (14) zu füllen, wobei die Kühleinheit (14) eine Vielzahl (16) von Kühlelementen (18) aufweist, die dazu eingerichtet ist, die bestimmte Menge an Lebensmittelprodukten in der Kühleinheit (14) zu kühlen, wobei das Kühlsystem (10) dazu eingerichtet ist, eine Gruppe von Kühlelementen (18) aus der Vielzahl (16) von Kühlelementen (18) basierend auf der vorbestimmten Menge an Lebensmittelprodukten in der Kühleinheit (14) auszuwählen, wobei das Kühlsystem (10) dazu eingerichtet ist, die vorbestimmte Menge an Lebensmittelprodukten mit der ausgewählten Gruppe von Kühlelementen (18) für eine vorgegebene Dauer und/oder auf eine vorgegebene Temperatur zu kühlen, wobei die Entnahmeeinheit (46) dazu eingerichtet ist, das gekühlte Lebensmittelprodukt aus der Kühleinheit (14) zu transportieren.

2. Kühlsystem (10) nach Anspruch 1, wobei das Lebensmittelprodukt während des Kühlens des Lebensmittelprodukts frei von jeglichen Scherkräften durch Rühren ist.

3. Kühlsystem (10) nach einem der vorherigen Ansprüche, wobei die Vielzahl (16) von Kühlelementen (18) zumindest in einer ersten Reihe (22) und einer zweiten Reihe (24) angeordnet ist, wobei das Kühlsystem (10) dazu eingerichtet ist, zumindest die erste Reihe (22) der Kühlelemente (18) oder zumindest die erste Reihe (22) und die zweite Reihe (24) der Kühlelemente (18) zu aktivieren, um die Gruppe von Kühlelementen (18) auszuwählen.

4. Kühlsystem (10) nach Anspruch 3, wobei die Vielzahl (16) von Kühlelementen (18) in einer Vielzahl von Reihen (26) angeordnet ist, wobei das Kühlsystem (10) dazu eingerichtet ist, zumindest einen Teil der Vielzahl von Reihen (26) auszuwählen, um die Gruppe von Kühlelementen (18) auszuwählen.

5. Kühlsystem (10) nach einem der Ansprüche 3 bis 4, wobei die Kühleinheit (14) für jede Reihe (22, 24) von Kühlelementen (18) ein separates Sperrklappenelement (28) zur Steuerung eines Luftstroms der jeweiligen Reihe (22, 24) von Kühlelementen (18) aufweist, wobei das Kühlsystem (10) dazu eingerichtet ist, die Gruppe von Kühlelementen (18) durch Aktivieren oder Deaktivieren der entsprechenden separaten Sperrklappenelemente (28) jede Reihe (22, 24) von Kühlelementen (18) auszuwählen.

6. Kühlsystem (10) nach einem der vorhergehenden Ansprüche, wobei jedes Kühlelement (18) ein Einlasselement (30) zum Einführen von Prozessluft in die Kühleinheit (14) und ein Auslasselement (32) zum Absaugen von Prozessluft aus der Kühleinheit (14) aufweist.

7. Kühlsystem (10) nach einem der vorherigen Ansprüche, wobei das Kühlsystem (10) eine Sensoreinheit (42) aufweist, die dazu eingerichtet ist, eine tatsächliche Kontur einer Oberfläche des Lebensmittelprodukts in der Kühleinheit (14) zu bestimmen, wobei das Kühlsystem (10) dazu eingerichtet ist, die ausgewählte Gruppe von Kühlelementen (18) basierend auf der tatsächlichen Kontur an Lebensmittelprodukten in der Kühleinheit (14) anzupassen.

8. Kühlsystem (10) nach einem der vorherigen Ansprüche, wobei die Einfülleinheit (12) mindestens ein Einfüllschneckenförderelement (44) zum Transportieren von Lebensmittelprodukten in die Kühleinheit (14) aufweist.

9. Kühlsystem (10) nach einem der Ansprüche 8 und 3 bis 5, wobei das Einfüllschneckenförderelement (44) dazu eingerichtet ist, die Kühleinheit mit Lebensmittelproduktreihe Reihe (22, 24) für Reihe (22, 24) von Kühlelementen (18) zu beladen.

10. Kühlsystem (10) nach einem der vorherigen Ansprüche, wobei die Entnahmeeinheit (46) mindestens ein Auslassschneckenförderelement (48) aufweist, wobei das Auslassschneckenförderelement (48) eine zunehmende Steigung aufweist, um eine konstante Fließgeschwindigkeit des Lebensmittelproduktes aufrechtzuerhalten.

11. Kühlsystem (10) nach Anspruch 10, wobei das Kühlsystem (10) eine Grundkörpereinheit (50) aufweist, wobei die Grundkörpereinheit (50) eine erste Seitenwand (36) und eine zweite Seitenwand (40) aufweist, wobei die erste Seitenwand (36) und die zweite Seitenwand (40) zueinander geneigt sind, sodass das Lebensmittelprodukt durch die Schwerkraft zum Auslassschneckenförderelement (48) gezogen wird.

12. Kühlsystem (10) nach Anspruch 11, wobei das Auslassschneckenförderelement (48) auf einer ersten Seite (50) der beiden Seitenwände (36, 40) angeordnet ist, wobei das Einfüllschneckenförderelement (44) auf einer zweiten Seite (52) der beiden Seitenwände gegenüber der ersten Seite (50) angeordnet ist, wobei das Einfüllschneckenförderelement (44) dazu eingerichtet ist, die Grundkörpereinheit (50) der Kühleinheit (14) mit Lebensmittelprodukt zu füllen, wobei das Einfüllschneckenförderelement (44) dazu eingerichtet ist, ein Lebensmittelprodukt über einen Abschnitt (54) der Grundkörpereinheit (50) zu transportieren, wobei dieser Abschnitt (54) mit Lebensmittelprodukt gefüllt ist, sodass die Kühleinheit (14) Reihe (22, 24) für Reihe (22, 24) von Kühlelementen (18) beladen wird.

13. Kühlsystem (10) nach Anspruch 12, wobei jede Reihe (22, 24) von Kühlelementen (18) entlang eines Vektors (56) orientiert ist, der eine Neigung im Wesentlichen von 40 bis 70 Grad in Bezug auf eine Erstreckungsrichtung (58) des Einfüllschneckenförderelements (44) aufweist, um das Beladen der Reihe (22, 24) für Reihe (22, 24) zu verbessern.

14. Verfahren (100) zur Steuerung eines Kühlsystems (10) für Lebensmittelprodukte, insbesondere schütt- und/oder rieselfähige Lebensmittelprodukthalbzeuge, umfassend die Schritte
- Empfangen (S1) eines Eingabedatenelementes, welches einen Indikator für eine vorbestimmte Menge an Lebensmittelprodukt aufweist, das in die Kühleinheit (14) des Kühlsystems (10) geladen wird,
- Erzeugen (S2) eines Ausgabedatenelementes, basierend auf dem Eingabedatenelement, wobei das Ausgabedatenelement eine Gruppe von Kühlelementen (18) aufweist, die aus einer Vielzahl (16) von Kühlelementen (18) zur Kühlung der vorbestimmten Menge an Lebensmittelprodukt ausgewählt wurden.

15. Verfahren (100) nach Anspruch 14, weiter umfassend den Schritt:
- Erzeugen (S3) eines Schaltsignals für mindestens ein separates Sperrklappenelement (28), welches ein Kühlelement (18) basierend auf dem Ausgabedatenelement steuert.
